# EUROPEAN PATENT APPLICATION

(11) **EP 1 220 502 A2**
(43) Date of publication of application: **03.07.2002**
(21) Application number: 01660240.1
(22) Date of filing: 19.12.2001
(51) Int. Cl.: H04L 12/58, H04L 9/32, H04Q 3/00

(54) **Method of customer identification in an e-mail system**

(30) Priority: 29.12.2000 FI 20002883
(71) Applicant: Elisa Communications OYJ, 00131 Helsinki (FI)
(72) Inventor: Merivirta, Juha, 01660 Vantaa (FI)
(74) Representative: Lahti, Heikki

(57) **Abstract**

The invention concerns a method of customer identification when an e-mail service is offered. The method is implemented in an intelligent network, to which a connection is set up by a tele communication subscription and a terminal equipment and which includes a database for identification of the customer. In the method, a connection to a service provider is set up by the customer's terminal equipment, and the customer's identity is checked based on the set up information. If the customer's identity is found to be correct, the customer is asked for an information of an e-mail address to be opened, and an e-mailbox is established.

The invention concerns also a method to identify a customer when using an e-mail service. In the method, connection is set up from the customer's terminal equipment to the service provider, and the customer's identity is checked based on the set up information. If the customer's identity is found to be correct, an electronic mail connection is established.

## Description

The invention concerns a method according to preamble of claim 1 for a customer identification when an e-mail service is offered and a method according to a preamble of claim 10 for a customer identification when using an e-mail service.

The invention relates to the establishment and use of an anonymous mailbox. Using an anonymous mailbox, the customer may send and receive electronic mail anonymously on the net, that is, in such a way that the customer's identity remains unknown to the other communicating party.

Such a prior art service is known, wherein the customer can use an e-mail identifier without the service provider or maintainer being able to check whether the customer's name or address is correct. This makes it possible for the customer using e-mail to act on the Internet or in some other network by using false contact information. Those maintaining these services identify such customers on the basis of the IP-address (Internet Protocol).

Such a practice is also known, wherein another already existing e-mail address is used as a way of identification of the customer when an e-mail address is opened. Hereby the e-mail address used for identification cannot be an address in anonymous use, but the customer's real contact information concerning the same must be known.

It is a problem with the above-mentioned known solutions that it is not possible for the service provider to identify the customer with full certainty. For example, in situations of misuse the service provider is not able to identify the misusing party. However, identification is necessary in order to cope with the misuse. Another problem that can be mentioned is that an already valid e-mail address is usually required before a new anonymous e-mail address can be opened.

The invention aims at bringing about a new method by which the service provider identifies the customer when an anonymous electronic mailbox is opened and used.

The method according to the invention for customer identification in the providing of an e-mail service is characterised in that in the method:
- contact is set up the service provider from the customer's terminal equipment,
- the customer's identity is checked on the basis of information contained in the established connection,
- if the customer's identity is found to be correct, the customer is asked for the information of the e-mail address to be opened, and
- an electronic mailbox is established.

The method according to the invention for customer identification when using an e-mail service is characterised in that in the method:
- contact is set up the service provider from the customer's terminal equipment,
- the customer's identity is checked on the basis of information contained in the established connection, and
- if the customer's identity is found to be correct, an e-mail connection is established.

By using the method according to the invention, the service provider gives the customer the possibility to open an e-mail connection, and over this e-mail connection the customer may send and receive e-mail anonymously. The method according to the invention is implemented in a data network, wherein by using an external database and call series service the customer is identified based on the subscriber A-identity. The data network is e.g. an intelligent network, to which the customer is in connection e.g. by way of a computer modem. The data network may also be e.g. a packet switched network based on the TCP/IP protocol.

One of the advantages of the invention that may be mentioned is that it makes it possible for the customer to send and receive e-mail in a data network entirely anonymously, that is, without the customer's identifier data being visible to any other parties. However, the service provider can at the same time identify the customer's identity, because the identification takes place with the aid of the network.

In accordance with the present invention, opening of an electronic mailbox is possible without any separate written agreements or without using any assisting staff. Hereby the customer need not visit e.g. the service provider's customer service premises or such. Since by the method according to the invention identification of the customer takes place with the aid of the data network based on the subscriber A-identity of the data communication connection, the identifier data may be regarded as fully certain. The identifier data is hereby obtained from a data communication centre maintained by the teleoperator. Tele communication connection here means a line (e.g. PSTN, ISDN) or mobile telephone subscription (e.g. GSM) or a fixed (e.g. xDSL) or packet switched data subscription (e.g. TCP/IP).

In the following, the invention will be described in greater detail with reference to the appended figures, wherein
Figure 1 shows an implementation environment for the method according to the invention.
Figure 2 shows the method according to the invention for opening an anonymous mailbox in flow chart form.
Figure 3 shows the method according to the invention for using an anonymous mailbox in flow chart form.

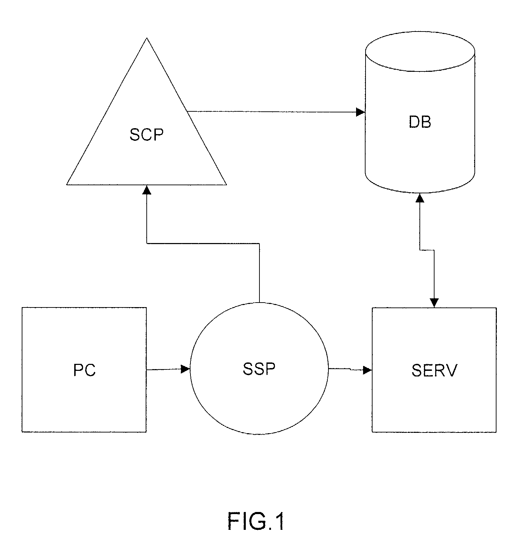

Figure 1 shows in flow chart form an example of an environment, wherein the methods according to the invention can be implemented. In this example, the customer makes contact using his terminal equipment, e.g. using his computer PC, with a telephone exchange SSP (Service Switching Point). The telephone exchange SSP is in connection with an intelligent network controller SCP (Service Control Point) and with a server SERV of a modem call series. In addition, the intelligent network controller SCP and the server SERV of the modem call series are in connection with an external database DB.

The methods according to the invention for using an anonymous mailbox may also be implemented in another kind of environment, e.g. in the case of a packet switched network the customer's terminal equipment PC is by way of a packet network in connection with the server SERV, and identification takes place e.g. based on an electronic identity card.

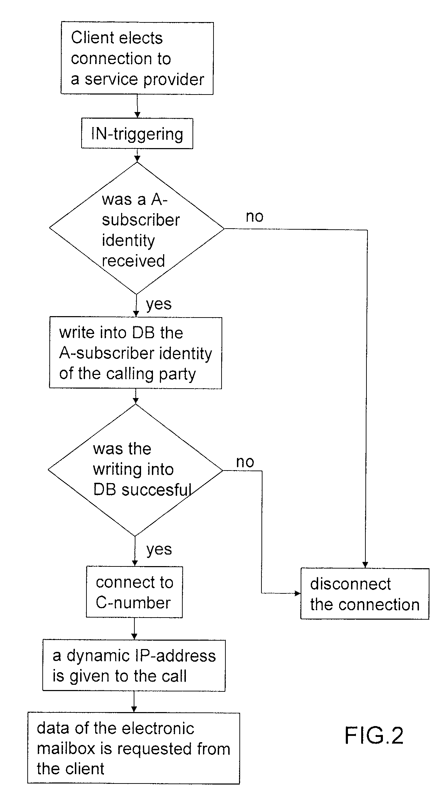

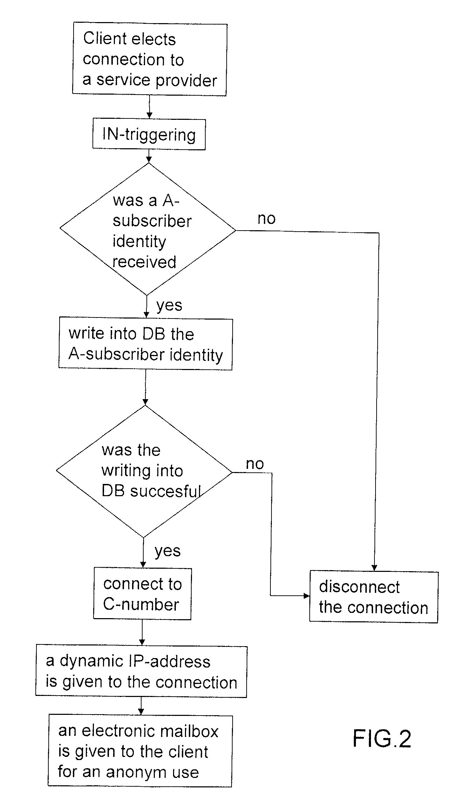

Figure 2 shows in flow chart form implementation of the method according to the invention. In accordance with the invention, the customer orders an anonymous electronic mailbox in the following manner. The customer sets up a connection to the service provider e.g. selecting by the modem of his computer a series of numbers, e.g. 010 xxx xxxx (step 21). The selection is directed to the SSP-exchange, which is routed to a controller of the data network (step 22). In the controller of the data network will start a service logic, that is and IN script, which first checks a subscriber A-identity in order to find out from which subscription the connection is being set up (step 23). Then the checked subscriber A-identity is written into an external database, whereby it exists in a form available to the data network, e.g. an IP network (step 24). In case the subscriber A-identity checked in step 23 is not a correct number, the connection is disconnected, whereby progress is made directly to step 27 in Figure 2.

When the subscriber A-identity has been written successfully into the external database, progress is made to step 26, where the SSP telephone exchange connects the call to a modem call series. Then the server of the modem call series provides the connected connection with an identifier, for example, a dynamic IP-address, and checks the subscriber A-identity of the connection (step 28). If the checked subscriber A-identity responds with the subscriber A-identity data obtained from the external database, the identification is successful. Alternatively, the customer's identity may be checked based on an electronic identity card. The identification may also be based on a certified permanent IP-address given to the user. In addition, identification may be arranged as an identification service produced by a so-called reliable third party.

Next, the customer is asked for the user identifier of an electronic mailbox chosen by the customer, either using the terminal connection or by an inquiry made on the www page (step 29). If the customer hereby gives such an identifier, which is already in use, the customer is asked to choose another user identifier. The procedure continues in this way until the customer has given such a user identifier, which has not been in use earlier. In addition, the customer is asked to certify the correctness of a password, e.g. by writing twice the password responding to the user identifier. As a last function the customer is provided with all information needed for the new electronic mailbox.

The flow chart in Figure 3 shows the use of an anonymous mail address, which takes place as follows. Subscriber A uses first his computer modem to select a number series, e.g. 010 xxx xxxx (step 31). The selection is directed to the SSP-exchange, which brings about a triggering to the intelligent network controller SCP (step 32). An IN script relating to this service is hereby started at the intelligent network controller SCP, which script first checks the subscriber A-identity to find out from which subscription the contact is being set up (step 33). If checking of the subscriber A-identity fails, the service logic will command the SSP-telephone exchange to disconnect the connection (step 37). After a successful check of the subscriber A-identity the subscriber A-identity of the party seting up the connection is written into the external database DB (step 34). Hereby it exists in the form available to the IP-network. If writing in the external database DB fails (step 35), the service logic will command the SSP-telephone exchange to disconnect (step 37) the connection.

When the subscriber A-identity has been written successfully into the external database DB, the communication exchange is given a command to set up a connection with the modem call series (step 36). Next, the server of the modem call series provides the incoming connection with a dynamic IP-address and checks the subscriber A-identity of the established connection by comparing it with the subscriber A-identity information obtained from the external database (step 38). If the subscriber A-identity is accepted in the comparison, the identification is successful and a connection is established with the server of the modem call series (step 39). Identification of the customer is then also successful and the customer may send and receive electronic mail in a normal manner by the e-mail address he has been given. Since the address is an anonymous e-mail address, the customer's name is not disclosed in the address field, whereby the customer may act with full anonymity when using his electronic mailbox.

According to the present invention, the service provider may also determine a user identifier for his customer instead that the customer chooses a user identifier on his own for his electronic mailbox. Hereby the service provider chooses the letters and/or numbers for the user identifier at random or in the manner it wishes.

If the service provider is registered and has acquired for use several network identifiers for itself, which end e.g. with com or net, the customer may be given a possibility to choose from these a network identifier suitable for himself

With the method according to the invention, the customer may also use the electronic mailbox from several different data communication subscriptions by giving to the operator a list of permitted subscriber A identities.

In the following the claims are presented, but the intention is not to limit the invention to these only, but the invention may be modified within the scope of the inventive idea defined in the claims.

## Claims

1. Method for a customer identification when an e-mail service is offered, which method is implemented in a data network, to which is connected by a tele communication subscription and terminal equipment, and which includes a database for identification of the customer, **characterised in that** the method includes steps, wherein:
- a connection to a service provider is set up by a customer's terminal equipment,
- the customer's identity is checked based on information contained in the established connection,
- if the customer identity is found to be correct, the customer is asked for information of the e-mail address to be opened, and
- an electronic mailbox is established.

2. Method according to claim 1, **characterised in that** from the customer's terminal equipment is set up the connection with the service provider by selecting a series of numbers by a customer's computer modem.

3. Method according to claim 1 or 2, **characterised in that** the customer identity is checked by comparing it with the information in the service provider's possession, and if the customer identity responds with the information about the customer's identity in the service provider's possession, the customer is asked for information of the e-mail address to be opened.

4. Method according to anyone of claims 1 - 3, **characterised in that** the customer identity is checked based on the subscriber A-identity, and if the customer's subscriber A-identity responds with the information about the customer's subscriber A-identity in the service provider's possession, the customer is asked for information of the e-mail address to be opened.

5. Method according to anyone of claims 1 - 4, **characterised in that** the customer identity is checked based on an electronic identity card.

6. Method according to anyone of claims 1 - 5, **characterised in that** by the customer's terminal equipment is connected to an intelligent network, wherein the formed selection is directed to a SSP-telephone exchange, at a intelligent network controller is started a function, which identifies the subscriber A-identity of the call, the subscriber A-identity is written into an external database, the call is connected to the server of a modem call series, the call is given a dynamic IP-address and the subscriber A-identity is checked by the server of the modem call series, the subscriber A-identity is compared with the subscriber A-identity obtained from the external database.

7. Method according to anyone of claims 1 - 6, **characterised in that** the customer is asked to give a user identifier he desires, and if the given user identifier is already in use earlier, the customer is asked to give another identifier, and this step is repeated, until the customer has given such an identifier, which is not already in use.

8. Method according to anyone of claims 1 - 7, **characterised in that** the customer is given a user identifier chosen by the service provider.

9. Method according to anyone of claims 1 - 8, **characterised in that** the customer is asked to certify the given password by writing it twice or more times.

10. Method for a customer identification when using an e-mail service, which method is implemented in a data network, to which the user is connected by a tele communication subscription and terminal equipment, **characterised in that** the method includes steps, wherein:
- a connection to a service provider is set up by a customer's terminal equipment,
- the customer's identity is checked based on the information contained in the established connection, and
- if the customer identity is found to be correct, an electronic mail connection is established.

11. Method according to claim 10, **characterised in that** the customer identity is checked by comparing it with the information in the service provider's possession, and if the customer identity responds with the information about the customer identity in the service provider's possession, an electronic mail connection is established.

12. Method according to claim 10 or 11, **characterised in that** the customer identity is checked based on the subscriber A-identity, and if the customer's subscriber A-identity responds with the information about the subscriber A-identity in the service provider's possession, the customer is asked for the information of the e-mail address to be opened.

13. Method according to anyone of claims 10 - 12, **characterised in that** the customer identity is checked based on an electronic identity card.

14. Method according to anyone of claims 10 - 13, **characterised in that** by the customer's terminal equipment is connected to the intelligent network, wherein the formed selection is directed to the SSP-telephone exchange, by the intelligent network controller is started a function, which identifies the subscriber A-identity of the call, the subscriber A-identity is written into an external database, the call is connected to the server of the modem call series, the call is provided with a dynamic IP-address and the subscriber A-identity is checked by the server of the modem call series, the subscriber A-identity is compared with a subscriber A-identity obtained from the external database.

15. Method according to anyone of claims 10 - 14, **characterised in that** the connection is disconnected, if writing of the subscriber A-identity into the external database fails.

16. Method according to anyone of claims 10 - 15, **characterised in that** the connection is disconnected, if checking of the subscriber A-identity fails.
